# EUROPÄISCHE PATENTSCHRIFT

(11) **EP 0 350 016 B1**
(45) Veröffentlichungstag und Bekanntmachung des Hinweises auf die Patenterteilung: **01.06.1994**
(21) Anmeldenummer: 89112293.9
(22) Anmeldetag: 05.07.1989
(51) Int. Cl.: G11B 5/86

(54) **Verfahren und Einrichtung zum Duplizieren des Inhalts von Datenträgern**
Process and apparatus to copy the contents of record carriers
Procédé et dispositif pour dupliquer le contenu de supports d'informations

(30) Priorität: 08.07.1988 DE 3823233
(43) Veröffentlichungstag der Anmeldung: 10.01.1990
(73) Patentinhaber: TANDBERG DATA A/S, 0808 Oslo 8 (NO)
(72) Erfinder: Dahlerud, Ole Chr., N-0883 Oslo 8 (NO)
(74) Vertreter: Goddar, Heinz J., Dr.

(56) Entgegenhaltungen:
- WO-A-84/00239
- US-A- 3 805 284
- US-A- 4 410 917
- US-A- 4 628 370
- US-A- 4 727 509

## Beschreibung

Die Erfindung bezieht sich auf ein Verfahren zum Duplizieren des Inhalts von magnetischen und optischen Datenträgern sowie auf eine Einrichtung zur Durchführung dieses Verfahrens.

Mit dem weiteren Vordringen der elektronischen Datenverarbeitung in alle Bereiche der Wirtschaft hat sich der Trend verstärkt, zusätzlich zu großen datenverarbeitenden Systemen immer mehr Rechnerleistung auch unmittelbar am Arbeitsplatz zur Verfügung zu stellen. Dies kann in Form von sogenannten intelligenten Endgeräten geschehen, aber auch wie beispielsweise beim Personal Computer in Form von kleinen, nichtsdestoweniger leistungsfähigen selbständigen Rechnersystemen. Als Folge dieses Trends wird für eine Vielzahl von intelligenten Geräten dieselbe Steuerinformation benötigt, um bestimmte Programmaufgaben erledigen zu können. Auch werden für diese wachsende Vielzahl von dezentralen oder selbständigen intelligenten Modulen immer mehr fertige Programme entwickelt und angeboten. Praktisch bedeutet dies, daß eine Vielzahl von Datenträgern, wie feste oder flexible Magnetspeicherplatten, aber auch Magnetbänder mit identischem Dateninhalt immer häufiger erstellt werden und vielfach auch als selbständige Produkte gehandelt werden.

Dabei stellt sich das Problem, den Dateninhalt eines solchen Datenträgers auf eine möglichst kostengünstige Weise zu duplizieren, d. h. von einem Datenträger auf eine Vielzahl gleichartiger oder auch anderer Datenträger zu übertragen. Bei optischen Speichermedien als Datenträger käme dafür ein mechanischer Preßvorgang unter Verwendung einer Masterplatte in Frage. Diese mechanische Technologie ist seit langem bekannt, dementsprechend ausgereift und kostengünstig. Optische Speichermedien haben sich aber bisher noch nicht in großem Umfang durchgesetzt. In den allermeisten Fällen werden Datenträger eingesetzt, auf denen die Information magnetisch gespeichert ist. Dies bedeutet, daß für den Duplizierungsvorgang für jeden zu beschreibenden Datenträger jeweils ein geeignetes Speichergerät zur Verfügung stehen muß. Die zu speichernde Dateninformation wird von einer Datenquelle übernommen, die fest mit dem Speichergerät verbunden ist oder über ein Bussystem gezielt mit jeweils einem von mehreren angeschlossenen Speichergeräten in Verbindung tritt.

Im vorliegenden Fall wird diese Datenquelle als Host-Prozessor bezeichnet, worunter jede Art von Ein/Ausgaberechner eines zentralen, dezentralen oder auch selbständigen Rechnersystemes verstanden werden soll, der dem Zwecke dient, Dateninformation mit über ein Bussystem angeschlossenen peripheren Speichergeräten auszutauschen. Wie bereits angedeutet, ist es ein charakteristisches Merkmal bekannter Ein/Ausgabesysteme, daß der Host-Prozessor zwar simultan alle angeschlossenen peripheren Speichergeräte über das Bussystem bedient, genau genommen aber zu einem bestimmten Zeitpunkt jeweils nur mit einem der angeschlossenen Speichergeräte in Verbindung tritt. In einem solchen konventionellen Ein/Ausgabesystem ist die Verarbeitungsleistung des Host-Prozessors derart ausgelegt, daß er im Mittel alle Anforderungen auf einen Datentransfer der langsameren peripheren Speichergeräte so bedienen kann, daß bei diesen praktisch keine Totzeiten entstehen.

Derartige konventionelle Ein/Ausgabesysteme werden gegenwärtig auch zum Duplizieren von Datenträgern benutzt, sie sind aber an die Besonderheiten eines solchen Dupliziervorganges nicht optimal angepaßt. Hier besteht das Problem darin, eine Vielzahl von Datenkopien in einen möglichst kurzen Zeitraum kostengünstig zu erstellen, d. h. identische Dateninformation simultan oder besser noch tatsächlich parallel auf Datenträgern einer möglichst großen Vielzahl peripherer Speichergeräte abzuspeichern. Zwar kann bei diesem Kopiervorgang davon ausgegangen werden, daß auf Datenträger gleichen Typs, d. h. entweder auf magnetische Festplatten, flexible Platten oder auch Magnetbänder kopiert wird. Dennoch ist es ohne besondere Vorkehrungen nicht unmittelbar möglich, eine Vielzahl von Speichergeräten auch eines Typs unmittelbar parallel an den Host-Prozessor anzuschließen und so die zu kopierende Dateninformation betriebssicher und ohne Datenverlust parallel in alle angeschlossenen Speichergeräte zu übertragen. Dies wäre nur möglich, wenn alle peripheren Speichergeräte von vornherein exakt synchron arbeiteten. Durch Gerätetoleranzen bedingt, kann dies aber nicht vorausgesetzt werden.

Ein Verfahren zum Duplizieren des Inhaltes von magnetischen Datenträgern mit Hilfe eines zentralen Host-Prozessors ist auch aus der US-A 4,727,509 bekannt. Die parallel empfangenden Speichergeräte geben zum Synchronisieren der zu duplizierenden Dateninformation zunächst individuelle Anforderungssignale ab, die im Host-Prozessor erst wirksam werden, sobald alle Speichergeräte durch "Daisy-Chaining" eine solche Anforderung abgegeben haben.

Der vorliegenden Erfindung liegt die Aufgabe zugrunde, ein verfahren bereitzustellen, mit dem das Duplizieren von Daten mit möglichst geringem technischen Aufwand möglich ist. Dabei sollen sich zur Durchführung eines erfindungsgemäßen Verfahrens auch Speichergeräte mit konventionellen Schnittstellen bzw. mit möglichst geringen Anpassungen dieser Schnittstellen einsetzen lassen.

Diese Aufgabe wird von einem Verfahren wie in Patentanspruch 1 definiert gelöst. Eine Einrichtung zum Durchführen des Verfahrens ist in Anspruch 5 angegeben.

Praktisch ermöglicht das Verfahren synchrone Speichervorgänge in einer Vielzahl, theoretisch nicht begrenzten Anzahl von Speichergeräten des gleichen Typs, wobei jedes Speichergerät mit seiner individuellen, von den benachbarten Speichergeräten mehr oder minder abweichenden Verarbeitungsgeschwindigkeit läuft. Vorzugsweise hat jedes Speichergerät, wie üblich, einen eigenen Datenpuffer, so daß individuelle Fehlerkontrolle und auch Fehlerkorrektur, d. h. erneutes Einspeichern fehlerhaft gespeicherter Blöcke der Dateninformation, möglich ist. Alle Speichergeräte setzen den Speichervorgang fort, solange noch einzuspeichernde Daten im Datenpuffer enthalten sind. Der Host-Prozessor überträgt Daten in die Datenpuffer der Speichergeräte parallel, d. h. aktualisiert den Inhalt aller angeschlossenen Datenpuffer gleichzeitig. In bezug auf den Datentransfer und seine Steuerung wirkt sich dies für den Host-Prozessor so aus, als ob er lediglich mit einem peripheren Gerät zusammenarbeitete. Unter anderem bedeutet dies im Vergleich zu einem konventionellen Ein/Ausgabesystem, daß der Host-Prozessor mit dem Datentransfer zu den peripheren Speichergeräten wesentlich weniger belastet ist. Auch bei einem sehr umfangreichen System mit einer Vielzahl von angeschlossenen peripheren Speichergeräten werden deshalb an die Leistungsfähigkeit des Host-Prozessors keine besonderen Anforderungen gestellt, er kann daher auch umfangreiche Testroutinen ausführen.

Ein besonderer Vorteil dieses Verfahrens wird bei einer Ausgestaltung der Erfindung deutlich, die sich auf eine Einrichtung zur Durchführung dieses Verfahrens bezieht. Hierbei zeigt sich, daß es eines nur geringen technischen Aufwandes bedarf, um trotz einer Vielzahl von angeschlossenen peripheren Speichergeräten die Synchronisierung für einen Datentransfer zu gewährleisten. Um sicherzustellen, daß ein Datenanforderungssignal im Host-Prozessor erst wirksam wird, wenn alle peripheren Speichergeräte eine entsprechende Datenanforderung abgegeben haben, könnte jedes periphere Speichergerät eine solche Datenanforderung über eine eigene Steuerleitung abgeben. Diese individuellen Datenanforderungssignale der einzelnen Speichergeräte wären logisch miteinander zu verknüpfen, indem man jede einzelne Steuerleitung einem Eingang einer UND-Schaltung mit entsprechend vielen Eingängen zuführt. Das aktive Ausgangssignal dieser UND-Schaltung wäre dann ein geeignetes Datenanforderungssignal, mit dem man den Host-Prozessor ansteuern könnte. Diese Lösung wäre aber technisch aufwendig, außerdem unvorteilhaft und wenig flexibel bezüglich ausfallender Geräte.

Die erfindungsgemäße Lösung macht sich stattdessen die Eigenschaften der sogenannten "wired AND"- bzw. "wired OR"-Verknüpfung zunutze und verwendet bei den peripheren Speichergeräten zur Abgabe der individuellen Datenanforderungssignale Ausgangsstufen mit einem offenen Kollektor-Ausgang. Derartige Ausgänge kann man im Unterschied zu üblicherweise verwendeten Gegentakt-Endstufen ohne weiteres parallel schalten und über einen gemeinsamen Kollektorwiderstand betreiben. Auf der gemeinsamen, an alle derart ausgebildeten Ausgangsstufen angeschlossenen Signalleitung liegt das Potential nur dann auf einem hohen Pegel, wenn alle Ausgänge der peripheren Speichergeräte hohen Signalpegel aufweisen. In positiver Logik entspricht dies einer UND-Verknüpfung. Bekanntlich läßt sich in entsprechender Weise in negativer Logik analog eine ODER-Verknüpfung realisieren.

Im vorliegenden Fall wird diese an sich bekannte Möglichkeit von fest verdrahteten Phantom-Verknüpfungen in vorteilhafter Weise dazu benutzt, die individuellen Steueranforderungen der einzelnen peripheren Speichergeräte über nur wenige Steuersignalleitungen logisch miteinander zu verknüpfen und dem Host-Prozessor zuzuführen. Im Falle von Datenanforderungen weisen die entsprechenden Ausgangsstufen der peripheren Speichergeräte zwei entsprechende Signalausgänge je einer offenen Kollektor-Schaltung auf, deren Signalzustände zueinander invers aktiviert sind. So läßt sich mit jeweils einer der Signalleitungen eine verdrahtete UND-Verknüpfung bzw. eine verdrahtete ODER-Verknüpfung realisieren und davon ein prozessorinternes Datenanforderungssignal mit entsprechenden Signalzuständen ableiten.

Mit dieser Implementierung der Synchronisierung der einzelnen angeschlossenen Speichergeräte für einen parallelen Datentransfer wird neben dem geringen technischen Aufwand ein hohes Maß an Flexibilität erreicht. Das System als solches ist dann, systematisch betrachtet, keineswegs auf eine ganz bestimmte Anzahl von angeschlossenen und zu betreibenden peripheren Speichergeräten beschränkt. Es läßt außerdem auch zu, in einem Fehlerfall ein peripheres Gerät individuell zu deaktivieren, ohne daß das Gesamtsystem deswegen außer Betrieb ginge. Durch eine Überwachungsroutine muß lediglich sichergestellt sein, daß ein momentan fehlerhaft arbeitendes Speichergerät entweder aufgrund seiner eigenen Fehlerüberwachung sich selbst abschaltet oder vom Host-Prozessor deaktiviert wird. Dabei besteht lediglich die Zusatzbedingung, daß ein solches deaktiviertes Speichergerät zwangsweise simulierte Steuersignale generiert, um bei einem Geräteausfall nicht die Funktionsfähigkeit des Gesamtsystems mehr als unvermeidbar zu beeinträchtigen.

Auch in diesem Anwendungsfall tauscht der Host-Prozessor mit den peripheren Speichergeräten eine Mehrzahl von Steuersignaien aus, die auch bei anderen konventionellen Bussystemen üblich sind, um den Datenaustausch zu steuern. Über entsprechende Adressen kann der Host-Prozessor beispielsweise zur Durchführung bestimmter Tests oder zur Abfrage des Status der Speichergeräte mit jedem einzelnen Speichergerät individuell in Verbindung treten. Auch hier können verdrahtete logische Verknüpfungen benutzt werden. Dies gilt beispielsweise bei einer Statusabfrage der peripheren Geräte durch den Host-Prozessor. Dabei läßt sich unter anderem über eine verdrahtete UND-Verknüpfung feststellen, ob alle angeschlossenen Speichergeräte betriebsbereit sind. Ist dies nur für eines der angeschlossenen Speichergeräte nicht der Fall, so stellt der Host-Prozessor einen entsprechenden Signalzustand beim verknüpften Statussignal fest. Er muß dann allerdings individuell die einzelnen Speichergeräte abfragen, um festzustellen, welches Speichergerät nicht betriebsbereit ist, so daß er es deaktivieren kann.

Andere Weiterbildungen und Vorteile der Erfindung ergeben sich aus der nachfolgenden Beschreibung eines Ausführungsbeispieles, die anhand der Zeichnung erfolgt. Dabei zeigt:
FIG 1 und FIG 2 jeweils schematisch anhand eines Blockschaltbildes mögliche Ausgestaltungen für den Austausch von Daten- und Steuerinformationen zum Zwecke der Duplizierung von Datenträgern mit einem Host-Prozessor und einer Mehrzahl von peripheren Speichergeräten, hier als Magnetbandgeräte dargestellt, die über einen Daten- und einen Steuerbus mit dem Host-Prozessor verbunden sind,
FIG 3 ein Blockschaltbild der in FIG 1 schematisch dargestellten Einrichtung zum Duplizieren des Inhalts von Datenträgern, in dem detailliert die Schaltung für die Übertragung geräteindividueller Anforderungssignale an den Host-Prozessor sowie deren Decodierung im Host-Prozessor dargestellt ist,
FIG 4 eine Reihe von Impulsdiagrammen zur Erläuterung der in FIG 3 dargestellten Einrichtung,
FIG 5 eine Reihe von Impulsdiagrammen zur Erläuterung eines Befehlszustandes der Dupliziereinrichtung,
FIG 6 entsprechende Impulsdiagramme zur Erläuterung eines Datenausgabezustandes der Dupliziereinrichtung,
FIG 7 Impulsdiagramme zur Erläuterung eines Dateneingabezustandes der Dupliziereinrichtung, in dem anschließend an einen Befehlszustand eines der Speichergeräte ausgewählt wird, um Daten zum Host-Prozessor zu übertragen und
FIG 8 eine weitere Reihe von Impulsdiagrammen zur Erläuterung eines Statuszustandes der Dupliziereinrichtung, in dem die Ausführung eines Befehles des Host-Prozessors durch eines oder mehrere der peripheren Speichergeräte bestätigt wird.

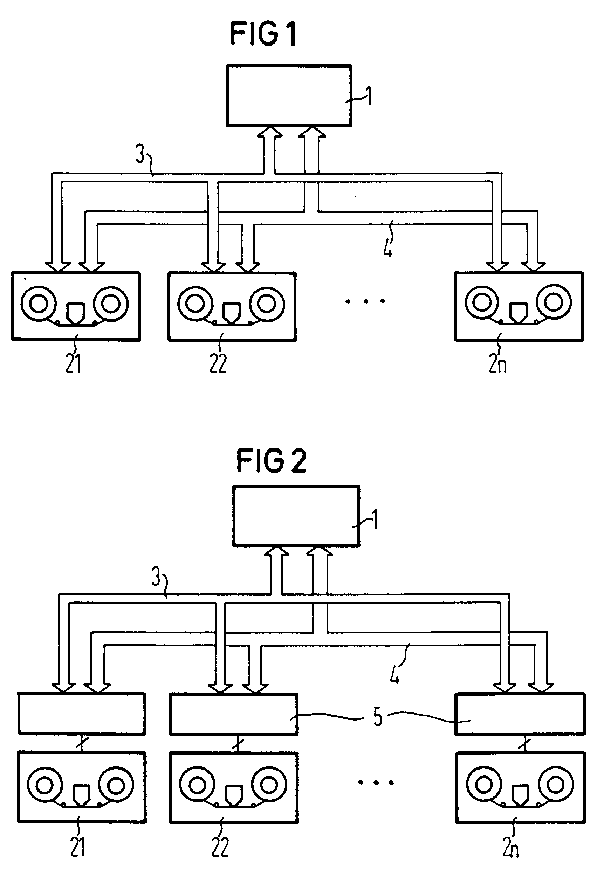

In FIG 1 ist schematisch eine Einrichtung zum Duplizieren des Inhalts von Datenträgern mit Hilfe eines zentralen Host-Prozessors 1 und einer Vielzahl von peripheren Speichergeräten 21 ... 2n, hier beispielhaft als Magnetbandgeräte angedeutet, dargestellt. Der Host-Prozessor 1 und die peripheren Speichergeräte 21 ... 2n sind über je einen Datenbus 3 und einen Steuerbus 4 untereinander verbunden. Der Datenbus 3 ist beispielsweise 9 Bit breit, um ein Datenbyte sowie ein Paritätsbit parallel übertragen zu können. Der Steuerbus 4 dient zum parallelen Übertragen einer Mehrzahl von Steuersignalen, wie noch erläutert wird. Der Datenbus 3 und der Steuerbus 4 können physikalisch als ein vieladriges Flachbandkabel realisiert sein. Eines der Kabelenden ist mit entsprechenden Anschlüssen des Host-Prozessors 1 verbunden und jede Kabelleitung ist zu entsprechenden Anschlüssen der peripheren Speichergeräte 21, 22 bis 2n parallel durchgeschleift. Diese Systemkonfiguration erfordert eine noch im einzelnen genauer zu beschreibende Ausgestaltung, insbesondere des Steuerbusses 4, sowie entsprechende Schnittstellen des Host-Prozessors 1 und der peripheren Speichergeräte 2n.

In FIG 2 ist schematisch eine Variante dieser Systemkonfiguration für eine Einrichtung zum Duplizieren des Inhalts von Datenträgern dargestellt. Hier ist insbesondere darauf abgestellt, daß bei einem derartigen System periphere Speichergeräte 21 ... 2n mit Standardschnittstellen eingesetzt werden können. Da sowohl die Systemkonfiguration gemäß FIG 1 als auch gemäß FIG 2 zum Duplizieren von Datenträgern einen echten parallelen Datentransfer zu allen angeschlossenen peripheren Speichergeräten 2n leisten soll, müssen über den Steuerbus 4 bestimmte, noch zu erläuternde Steuersignale insbesondere zum Synchronisieren der peripheren Speichergeräte 21 ... 2n übertragbar sein. Da dies nicht notwendigerweise unmittelbar über eine Standardschnittstelle möglich ist, sind den einzelnen peripheren Speichergeräten 21, 22 bzw. 2n in FIG 2 Adapterschaltungen 5 vorgeschaltet, die ein Umsetzen bestimmter Schnittstellensignale in vorgegebene Steuersignale bzw. umgekehrt ermöglichen. Die busseitigen Anschlüsse dieser Adapterschaltungen 5 sind ähnlich der Systemkonfiguration gemäß FIG 1 an den Datenbus 3 bzw. den Steuerbus 4 mit seinen einzelnen Signalleitungen angeschlossen.

Ein konventionelles peripheres Speichergerät ist gemäß seiner Bestimmung so ausgebildet, daß es mit einem Ein/Ausgabeprozessor Steuer- und Dateninformationen austauschen kann. Es ist auch vielfach üblich, daß ein solcher Ein/Ausgabeprozesser simultan mehrere periphere Speichergeräte bedient und dann der Informationsaustausch mit den angeschlossenen peripheren Speichergeräten über ein Bussystem erfolgt. Für den vorliegenden Fall ist es daher nicht notwendig, eine schaltungsmäßige Realisierung der in FIG 1 dargestellten Systemkonfiguration in allen Einzelheiten zu beschreiben. Aus Gründen der Übersicht wird daher im folgenden lediglich auf die für den vorliegenden Anwendungsfall der Duplizierung von Speicherdaten typischen Besonderheiten eingegangen.

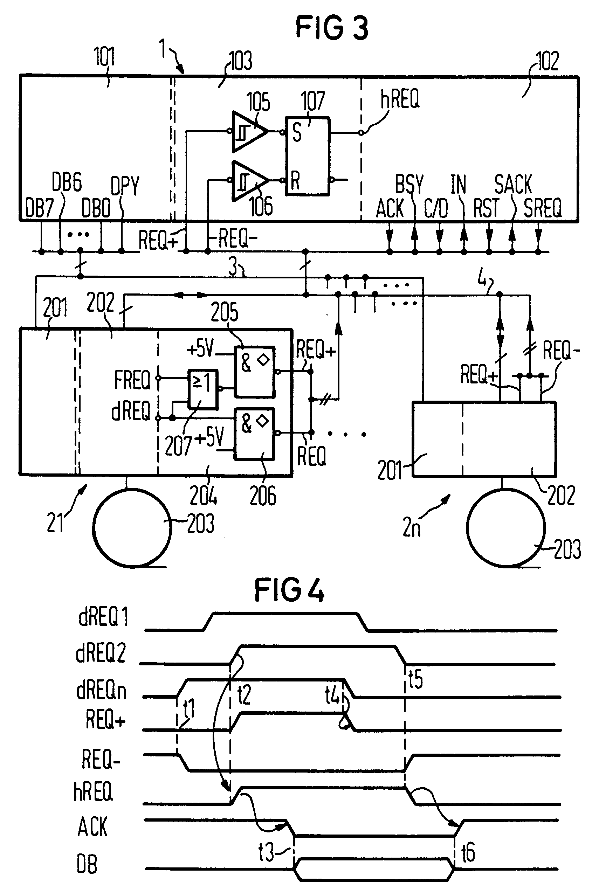

FIG 3 zeigt wesentliche Schaltungsdetails für die in FIG 1 dargestellte Systemkonfiguration. Vereinfachend ist der Host-Prozessor 1 in eine Ein/Ausgabeeinheit 101 und eine Steuereinheit 102 unterteilt. Eine Anpassungsschaltung 103 bildet dabei strukturell einen Teil der Steuereinheit 102. An die Ein/Ausgabeeinheit 101 ist der Datenbus 3 angeschlossen. Er umfaßt neun Datenleitungen zum parallelen Übertragen eines Datenbytes mit Datenbits DB7 bis DB0. Auf der neunten Datenleitung wird zur Datensicherung ein Paritätsbit DPY übertragen. Am geräteseitigen Ende des Datenbusses 3 sind die peripheren Speichergeräte 21 ... 2n angeschlossen. In FIG 3 sind diese Speichergeräte 21 ... 2n zur Verdeutlichung in eine Datenein/ausgabeeinheit 201, im wesentlichen einen Datenpuffer aufweisend, in eine Steuereinheit 202 und in ein Laufwerk 203, das den Datenträger aufnimmt, unterteilt. Einen Modul der Steuereinheit 202 der Speichergeräte 21 ... 2n bildet dabei ein Codiernetzwerk 204, das das geräteseitige Analogon zu der Anpassungsschaltung 103 im Host-Prozessor 1 bildet.

Die Steuereinheit 102 des Host-Prozessors 1 verkehrt mit den Steuereinheiten 202 der peripheren Speichergeräte 21 ... 2n über den Steuerbus 4. Im folgenden wird eine kurze Beschreibung der verschiedenen, darüber übertragenen Steuersignale gegeben. Die damit jeweils erzielte Funktion wird im einzelnen jedoch erst später beschrieben. Der Host-Prozessor 1 generiert in seiner Steuereinheit 102 ein Quittungssignal ACK. Der aktive Signalzustand dieses Steuersignales definiert die Bestätigung des Host-Prozessors 1 als Antwort auf eine Datenanforderung der peripheren Speichergeräte 21 ... 2n.

In den Host-Prozessor 1 wird von den peripheren Speichergeräten 21 ... 2n ein Tätigsignal BSY übertragen. Das von der Steuereinheit 102 des Host-Prozessors 1 empfangene Tätigsignal BSY ist ein Steuersignal, das durch eine fest verdrahtete UND-Verknüpfung individueller Tätigsignale der einzelnen peripheren Speichergeräte 21 ... 2n entsteht. Das verknüpfte Tätigsignal teilt dem Host-Prozessor 1 mit, daß alle peripheren Speichergeräte 21 ... 2n in eine Befehlsphase eines Datenaustauschzyklus eingetreten sind.

Ein weiteres, vom Host-Prozessor 1 abgegebenes Steuersignal ist ein Befehls/Datensignal C/D, das den angeschlossenen peripheren Speichergeräten 21 ... 2n mitteilt, ob Steuerinformation, d. h. Befehle oder ob Dateninformation über den Datenbus 3 übertragen wird.

Weiterhin empfängt der Host-Prozessor ein Eingabesignal IN. Am Eingang des Host-Prozessors 1 ist dieses Signal ein mit Hilfe einer fest verdrahteten ODER-Verknüpfung von individuellen Eingabesignalen der peripheren Speichergeräte 21 ... 2n abgeleitetes Signal. Dieses Signal teilt dem Host-Prozessor 1 mit, daß alle Speichergeräte 21 ... 2n bereit sind, Daten über den Datenbus 3 zu senden.

Der Host-Prozessor 1 gibt weiterhin ein generelles Rücksetzsignal RST ab, mit dem er alle angeschlossenen Speichergeräte 21 ... 2n in einen definierten Zustand rücksetzen kann.

Zum Synchronisieren der Übertragung von Statusinformation benutzt der Host-Prozessor ein Statusquittungssignal SACK, mit dem dieser den angeschlossenen peripheren Speichergeräten 21 ... 2n mitteilt, daß er bereit ist, Statusinformation zu empfangen.

Dieses Signal ist die Quittung des Host-Prozessors 1 auf entsprechende Anforderungssignale für einen Statustransfer der Speichergeräte 21 ... 2n. Diese individuellen Anforderungssignale werden dem Host-Prozessor über eine fest verdrahtete UND-Verknüpfung als Statusanforderungssignal SREQ zugeführt.

Vorstehend wurde mehrfach darauf hingewiesen, daß die dem Host-Prozessor über den Steuerbus 4 zugeführten Steuersignale BSY, IN bzw. SREQ jeweils durch eine fest verdrahtete logische Verknüpfung aus individuellen, von den peripheren Speichergeräten 21 ... 2n abgegebenen Steuersignalen abgeleitet sind. Wie dies im einzelnen realisiert ist, soll im folgenden anhand zweier weiterer, von den Speichergeräten 21 ... 2n zum Host-Prozessor 1 übertragener Steuersignale beispielhaft erläutert werden.

Aus Gründen der Synchronisation darf der Host-Prozessor 1 nur dann Daten über den Datenbus 3 parallel an die peripheren Speichergeräte 21 ... 2n übertragen, wenn alle diese Speichergeräte 21 ... 2n auch aufgrund ihres individuellen Verarbeitungszyklus zum Empfang der Daten bereit sind. Um dies sicherzustellen, werden zwischen den peripheren Speichergeräten 21 ... 2n und dem Host-Prozessor 1 Anforderungssignale bzw. Quittungssignale ausgetauscht. Ist beispielsweise das periphere Speichergerät 21 bereit, Dateninformation über den Datenbus 3 zu empfangen, so generiert es ein individuelles Datenanforderungssignal dREQ in seiner Steuereinheit 202 auf an sich bekannte Weise. Im vorliegenden Fall sollen nun alle entsprechenden individuellen Anforderungssignale der einzelnen peripheren Speichergeräte 21 ... 2n der Steuereinheit 102 des Host-Prozessors 1 so zugeführt werden, daß eine Datenanforderung im Host-Prozessor 1 erst dann wirksam und das Quittungssignal ACK erzeugt wird, wenn alle angeschlossenen peripheren Speichergeräte 21 ... 2n für den Datentransfer bereit sind.

Um diese logische Verknüpfung aller individuellen Datenanforderungen der Speichergeräte 21 ... 2n zu realisieren, sind in den Steuereinheiten 202 der Speichergeräte 21 ... 2n jeweils die Codiernetzwerke 204 vorgesehen. Jedes Codiernetzwerk weist zwei Ausgangsstufen auf, die als NAND-Glieder 205 bzw. 206 ausgebildet sind. Die Rautensymbole in den Darstellungen dieser NAND-Glieder 205, 206 von FIG 3 kennzeichnen, daß diese Verknüpfungsglieder einen offenen Kollektorausgang besitzen. Je ein Eingang der NAND-Glieder 205 und 206 liegt fest verdrahtet auf hohem Pegel, angedeutet durch eine Betriebsspannung von + 5 V. Den zweiten Eingängen der NAND-Glieder 205 und 206 ist das geräteindividuelle Anforderungssignal dREQ invertiert über ein NOR-Glied 207 bzw. unmittelbar zugeführt.

Das NOR-Glied 207 empfängt außerdem ein von der Steuereinheit 202 generiertes erzwungenes Anforderungssignal FREQ. Dieses Anforderungssignal hat die Funktion im Falle des nicht betriebsbereiten Zustandes des entsprechenden peripheren Speichergerätes, z. B. des Speichergerätes 21 sicherzustellen, daß sein Ausfall nicht zur Blockierung der gesamten Systemkonfiguration führt. Über ein erzwungenes Anforderungssignal FREQ simuliert jedes nicht betriebsbereite Speichergerät über den Steuerbus 4 ein Datenanforderungssignal dREQ. Ungeachtet des tatsächlichen Betriebszustandes wird damit ständig die Bereitschaft zu einem Datenempfang simuliert. Durch diese Maßnahme ist es möglich, die Ausgänge aller NAND-Glieder 205 der peripheren Speichergeräte 21 ... 2n fest verdrahtet parallel über eine Signalleitung des Steuerbusses 4 zu führen, ohne bei einem Geräteausfall das System zu blockieren. Entsprechendes gilt für die Ausgänge der NAND-Glieder 206. Über zwei Steuerleitungen werden daher dem Host-Prozessor 1 je ein verknüpftes positives und negatives Datenanforderungssignal REQ+ bzw. REQ- zugeführt. In der Anpassungsschaltung 103 der Steuereinheit 102 des Host-Prozessors 1 sind die entsprechenden Steuerleitungen zum Übertragen dieser Anforderungssignale REQ+, REQ-jeweils an den invertierenden Eingang je eines Empfangsverstärkers 105 bzw. 106 angeschlossen. Die Ausgänge dieser Empfangsverstärker 105 bzw. 106 sind jeweils mit dem invertierenden Setz- und Rücksetzeingang S bzw. R eines RS-Flipflops 107 verbunden, dessen Ausgang ein prozessorinternes Anforderungssignal hREQ abgibt.

Anhand der Impulsdiagramme von FIG 4 wird nun die Funktion der Codiernetzwerke 204 der peripheren Speichergeräte 21 ... 2n im Zusammenwirken mit der Anpassungsschaltung 103 der Steuereinheit 102 des Host-Prozessors 1 erläutert. Beispielhaft sind mit den Impulsformen dREQ1, dREQ2 bzw. dREQn geräteindividuelle Anforderungssignale einzelner peripherer Speichergeräte 21, 22 bzw. 2n angedeutet. Diese Anforderungssignale haben im gesetzten Zustand hohen Signalpegel. FIG 4 soll verdeutlichen, daß zu einem Zeitpunkt t1 beispielsweise das Speichergerät 2n schon für einen Datentransfer bereit ist und dementsprechend sein geräteindividuelles Anforderungssignal dREQn aktiviert. Aber erst zu einem späteren Zeitpunkt t2 sollen alle geräteindividuellen Anforderungssignale dREQ der peripheren Speichergeräte 21 ... 2n gesetzt sein. Im gewählten Beispiel von FIG 4 ist das Speichergerät 22 die Geräteeinheit, die als letzte ihr geräteindividuelles Anforderungssignal dREQ2 setzt. Zu diesem Zeitpunkt t2 gibt das NAND-Glied 205 des Codiernetzwerkes 202 des Speichergerätes 22 als letztes Speichergerät ein entsprechendes Steuersignal mit hohem Pegel ab. Aufgrund der Parallelschaltung aller offenen Kollektorausgänge der NAND-Glieder 205 aller Codiernetzwerke 202 der peripheren Speichergeräte 21 ... 2n ändert sich damit zu diesem Zeitpunkt t2 der Signalzustand des verknüpften positiven Datenanforderungssignales REQ+. Infolgedessen wird über den Empfangsverstärker 105 das RS-Flipflop 107 gesetzt und das prozessorinterne Anforderungssignal hREQ nimmt den hohen Signalpegel an. An dieser Stelle sei nochmals erinnert, daß dieser Signalzustand des RS-Flipflops 107 zum Zeitpunkt t2 auch dann eintritt, falls eines der peripheren Speichergeräte 21 ... 2n momentan nicht betriebsbereit ist. Denn mit dem entsprechenden erzwungenen Anforderungssignal FREQ simuliert das Codiernetzwerk 202 auch eines nicht betriebsbereiten peripheren Speichergerätes eine Datenanforderung.

Sobald alle betriebsbereiten Speichergeräte 21 ... 2n auch empfangsbereit sind, generiert der Host-Prozessor 1 in seiner Steuereinheit 102 zu einem Zeitpunkt t3 das Quittungssignal ACK, das im aktiven Zustand einen niedrigen Pegel aufweist. Zu diesem Zeitpunkt t3 wird ein auf dem Datenbus 3 übertragenes Datenbyte gültig, wie in der letzten Zeile von FIG 4 angedeutet ist. Außerdem löst dieses Quittungssignal ACK in den Steuereinheiten 202 der peripheren Speichergeräte 21 ... 2n eine Rücknahme der geräteindividuellen Anforderungssignale dREQ aus, so daß beispielsweise zu einem Zeitpunkt t4 als erstes das periphere Speichergerät 2n sein geräteindividuelles Anforderungssignal dREQn zurücksetzt.

Vorstehend wurde die fest verdrahtete UND-Verknüpfung der Signalausgänge der NAND-Glieder 205 zu dem positiven Datenanforderungssignal REQ+ betrachtet. Analoges gilt auch für die feste Verdrahtung der Signalausgänge der weiteren NAND-Glieder 206. Aufgrund des Aufbaus der Codiernetzwerke 204 ist in diesem Fall allerdings, bedingt durch die Inversion der geräteindividuellen Anforderungssignale dREQ in dem weiteren NAND-Glied 206 eine fest verdrahtete ODER-Verknüpfung realisiert. Dies bedeutet, daß sich der Signalpegel des verknüpften negativen Datenanforderungssignales REQ-bereits mit der ersten auftretenden geräteindividuellen Datenanforderung zum Zeitpunkt t1 ändert. Dieser Signalzustand wird auf der entsprechenden Steuerleitung solange gehalten, bis das letzte geräteindividuelle Datenanforderungssignal, im Beispiel von FIG 4 das Signal dREQ2 zum Zeitpunkt t5 zurückgenommen wird. Dabei sei betont, daß in diesem Fall nur die geräteindividuellen Anforderungssignale der tatsächlich betriebsbereiten peripheren Speichergeräte 21 ... 2n bewertet werden. Zum Zeitpunkt t5 wird damit am Rücksetzeingang R des RS-Flipflops 107 ein Rücksetzsignal wirksam, das das prozessorinterne Anforderungssignal hREQ zurücksetzt. Mit einer gewissen Verzögerungszeit wird dadurch in der Steuereinheit 102 des Host-Prozessors 1 ein Signalwechsel des Quittungssignales ACK zum Zeitpunkt t6 ausgelöst, so daß Signale auf dem Datenbus 3 ungültig werden.

Vorstehend wurde im einzelnen beispielhaft für die Datenanforderungssignale REQ+ bzw. REQ- die jeweilige logische Verknüpfung bzw. die damit erzielte Funktion im einzelnen beschrieben. Für die anderen von den peripheren Speichergeräten 21 ... 2n an den Host-Prozessor 1 übertragenen Steuersignale gelten ähnliche fest verdrahtete UND- bzw. ODER-Verknüpfungen, die schaltungstechnisch in analoger Form realisierbar sind. Eine detaillierte Beschreibung von Schaltungsdetails auch der Verknüpfung dieser weiteren, dem Host-Prozessor 1 zugeführten Steuersignale BSY, IN bzw. SREQ erscheint deshalb nicht notwendig.

Alle Kommunikation des Host-Prozessors 1 mit den peripheren Speichergeräten 21 ... 2n über den Steuerbus 4 basiert auf einem definierten Protokoll mit fünf verschiedenen Betriebszuständen, von denen jeweils nur einer möglich ist. Diese Betriebszustände umfassen einen Wartezustand, einen Befehlszustand, vom Host-Prozessor 1 aus betrachtet einen Datenausgabezustand sowie einen Dateneingabezustand und schließlich einen Statuszustand. Mit Ausnahme des Dateneingabezustandes sind auf dem Datenbus 3 übertragene Daten immer für alle angeschlossenen Speichergeräte 21 ... 2n gültig. In dem Dateneingabezustand überträgt allerdings zu einem bestimmten Zeitpunkt jeweils nur eines der peripheren Speichergeräte 21 ... 2n Daten in den Host-Prozessor 1. Dies bedeutet, daß der Host-Prozessor 1 in diesem Fall zunächst ein einzelnes der peripheren Speichergeräte 21 ... 2n auswählen muß, bevor er einen Befehl überträgt, der den Betriebszustand "Dateneingabe" einleitet.

Der Wartezustand ist gekennzeichnet durch die zurückgesetzten Zustände des Befehls-Datensignales C/D und des Tätigsignales BSY. In diesen Betriebszustand wird automatisch eingetreten, wenn der Host-Prozessor 1 das allgemeine Rücksetzsignal RST absetzt und damit das System in einen definierten Anfangszustand versetzt. Außerdem folgt ein Wartezustand auf den Statuszustand.

Der Befehlszustand ermöglicht dem Host-Prozessor 1 durch Übertragen bestimmter Befehle in allen angeschlossenen bzw. in einzelnen ausgewählten peripheren Speichergeräten 21 ... 2n definierte Funktionen zu veranlassen. Im vorliegenden Anwendungsfall soll die Dupliziereinrichtung bei möglichst geringem Anpassungsaufwand mit konventionellen und handelsüblichen Modulen aufgebaut werden. Deshalb enthält der verwendete Befehlssatz Befehle, die in Standardschnittstellen, wie beispielsweise der SCSI-Schnittstelle (Small Computer Systems Interface) definiert und allgemein bekannt sind. Ein weiteres Eingehen auf derartige Befehle erübrigt sich daher.

Darüber hinaus soll aber zugelassen sein, weitere, an den gegebenen Anwendungsfall des Duplizierens von Daten speziell angepaßte Befehle zu definieren. Ein solcher Befehl ist beispielsweise ein Auswahlbefehl, um jede beliebige Kombination der maximal im System vorgesehenen Speichergeräte 21 ... 2n selektieren, d. h. aktivierien zu können. Nimmt man beispielsweise an, daß maximal 32 periphere Speichergeräte in der Systemkonfiguration vorgesehen sind, dann könnte ein solcher Auswahlbefehl aus 5 Byte aufgebaut sein, wobei ein Byte der Operationsteil ist. Mit den 32 Bit der übrigen 4 Byte sind individuell die einzelnen Speichergeräte 21 ... 2n auswählbar. Ein nicht gesetztes Befehlsbit definiert dann umgekehrt ein bestimmtes, nicht selektiertes Speichergerät.

Andere Befehle können sich auf bestimmte Testroutinen beziehen. Auch bei konventionellen Ein/Ausgabesystemen werden die gespeicherten Daten gesichert bzw. überprüft. Im vorliegenden Fall einer Einrichtung zum Duplizieren von Daten kommt solchen Tests aber noch erheblichere Bedeutung zu, um tatsächlich fehlerfreie Kopien zu erstellen. Es ist daher denkbar, beispielsweise einen Schreibüberprüfungsbefehl "Verify" neu zu definieren. Mit einem solchen Befehle soll der Host-Prozessor 1 individuell festlegen, für welche Anzahl von Bytes der zuletzt geschriebenen Daten diese Überprüfung stattfinden soll. Ein anderer Befehl kann sich darauf beziehen, in ausgewählte Speichergeräte 21 ... 2n einen Kontrollblock mit einem Inhalt zu schreiben, der vom Host-Prozessor 1 an die peripheren Speichergeräte 21 ... 2n übertragen wird. Wird in diesem Zusammenhang ein Fehler festgestellt, so könnte man mit einem weiteren Steuerbefehl "Lesen Kontrollblock" das Auslesen des als fehlerhaft erkannten Kontrollblockes zum Überprüfen des aufgetretenen Fehlers veranlassen. Im wesentlichen durch eine entsprechende Programmierung des Host-Prozessors 1, aber auch der Steuereinheiten 202 der peripheren Speichergeräte 21 ... 2n bzw. der Adapterschaltungen 5 sind viele Ausgestaltungen denkbar, die der Fehlersicherung und der Überprüfung der duplizierten Daten dienen. Die hier genannten Beispiele sind daher nur als eine Auswahl zu verstehen.

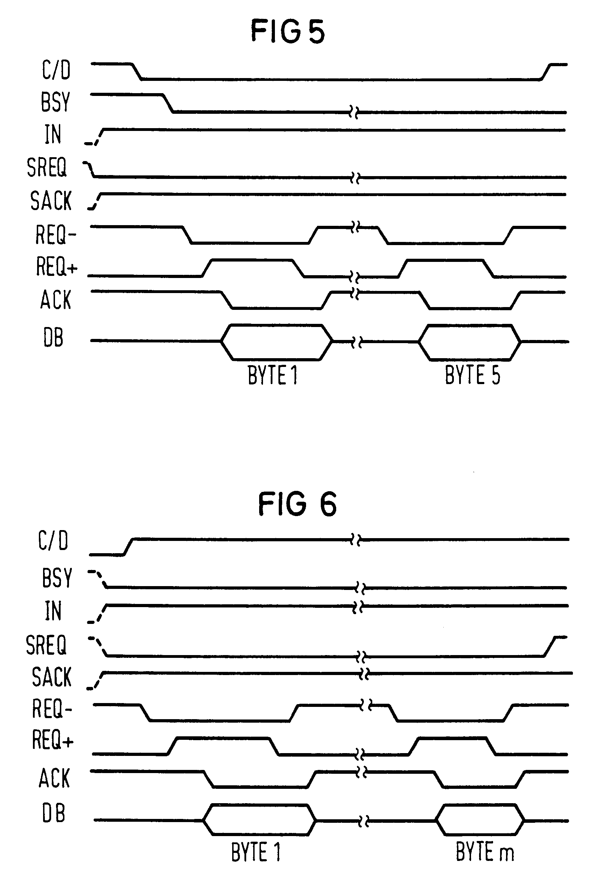

Anhand der Impulsdiagramme von FIG 5 wird nach diesem Überblick über einen möglichen Befehlssatz nun unmittelbar der Ablauf während eines Befehlszustandes erläutert. In den Befehlszustand wird eingetreten, sobald das Befehls/Datensignal C/D auf Niedrigpegel gesetzt wird. Auf diesen Signalwechsel sollten alle peripheren Speichergeräte 21 ... 2n in der Form reagieren, daß sie alle an den Host-Prozessor 1 gerichteten Steuersignale zurücksetzen. Nach einer bestimmten Verzögerungszeit sollen dann die peripheren Speichergeräte 21 ... 2n auf den Zustandswechsel des Befehls/Datensignales C/D durch Setzen des Tätigsignales BSY, wie in Zeile 2 von FIG 5 gezeigt, antworten. Andere Steuersignale, wie das Eingabesignal IN, das Statusanforderungssignal SREQ bzw. das Statusquittungssignal SACK, die in den nächsten Zeilen von FIG 5 dargestellt sind, ändern ihren Signalzustand während des Befehlszustandes nicht.

Nach einer weiteren Verzögerung werden nacheinander dem Host-Prozessor 1, wie vorstehend anhand von FIG 4 bereits ausführlich beschrieben, zunächst das negative und dann das positive Datenanforderungssignal REQ- bzw. REQ+ zugeleitet. Die entsprechenden Impulsformen sind in den nächsten beiden Zeilen von FIG 5 dargestellt. Der Host-Prozessor 1 antwortet darauf mit dem Quittungssignal ACK. Er kennzeichnet damit das erste Befehlsbyte, das über den Datenbus 3 übertragen wird, für einen bestimmten Zeitraum als gültig. In diesem Zeitraum werden, wie beschrieben, zunächst das positive Datenanforderungssignal REQ+ und anschließend das negative Datenanforderungssignal REQ-wieder rückgesetzt. Mit dem Rücksetzen des Quittungssignales ACK durch den Host-Prozessor 1 ist die Übertragung des ersten Befehlsbytes abgeschlossen.

Diese Sequenz wird insgesamt fünfmal durchgeführt, um alle fünf Befehlsbytes nacheinander an alle angeschlossenen peripheren Speichergeräte 21 ... 2n zu übertragen, wie in FIG 5 angedeutet ist. Mit der Übertragung des fünften Befehlsbytes ist die Übertragung des Befehles abgeschlossen und der Host-Prozessor 1 beendet den Befehlszustand durch einen Zustandswechsel des Befehls/Datensignales C/D.

Es ist darauf hinzuweisen, daß alle, auch die momentan nicht ausgewählten Speichergeräte 21 ... 2n, in den Befehlszustand eintreten müssen, um die fünf Befehlsbytes zu lesen. Denn jeder Befehl könnte ein Auswahlbefehl sein, um eines der bisher nicht selektierten peripheren Speichergeräte 21 ... 2n nunmehr zu selektieren. Dann muß dieses so neu selektierte periphere Speichergerät einer normalen Befehlssequenz folgen, andernfalls ignoriert es als nicht selektiertes Gerät den Befehl.

Anhand von FIG 6 wird nun die Abfolge in dem Datenausgabezustand erläutert. In diesen Betriebszustand kann nur eingetreten werden, wenn ein Befehlszustand vorausgegangen ist. Der Datenausgabezustand dient dazu, Befehlsparameterinformation oder zu duplizierende Dateninformation zu übertragen. Der Datenausgabezustand ist durch den hohen Pegel des Befehls/Datensignales C/D gekennzeichnet, wie in Zeile 1 von FIG 6 gezeigt ist. Das Tätigsignal BSY und das Eingabesignal IN, wie in den nächsten beiden Zeilen von FIG 6 gezeigt, verändern im Datenausgabezustand ihren Signalzustand nicht. Das Statusanforderungssignal SREQ ist zunächst rückgesetzt, so daß auch das Statusquittungssignal seinen Signalzustand nicht ändert. Dies ist in den nächsten beiden Zeilen von FIG 6 dargestellt. Die übrigen Impulsformen, die das negative und positive Datenanforderungssignal REQ- bzw. REQ+ und das Quittungssignal ACK betreffen, sind bereits vorstehend mehrfach erwähnt, so daß sich hier weiteres erübrigt.

Die beschriebene Sequenz wird mehrfach wiederholt, bis das letzte Byte BYTEm des entsprechenden Datentransfers übertragen ist. Nach Abschluß des Datentransfers und einer gewissen Verzögerungszeit geben alle peripheren Speichergeräte 21 ... 2n das Statusanforderungssignal SREQ ab. Sobald dieses als verknüpftes Anforderungssignal im Host-Prozessor 1 wirksam wird, ist damit definiert, daß alle peripheren Speichergeräte 21 ... 21n bereit sind, Statusinformation zu senden. Um den ordnungsgemäßen Ablauf im Datenausgabezustand sicherzustellen, müssen alle peripheren Speichergeräte 21 ... 2n, auch die nicht selektierten oder die aus anderen Gründen die Datenübertragung nicht ordnungsgemäß abschließenden Geräte Daten- und Statusanforderungssignale abgeben bzw. gegebenenfalls simulieren. Nur dann ist die ordnungsgemäße Verknüpfung der entsprechenden, im Host-Prozessor 1 wirksam werdenden Signale möglich.

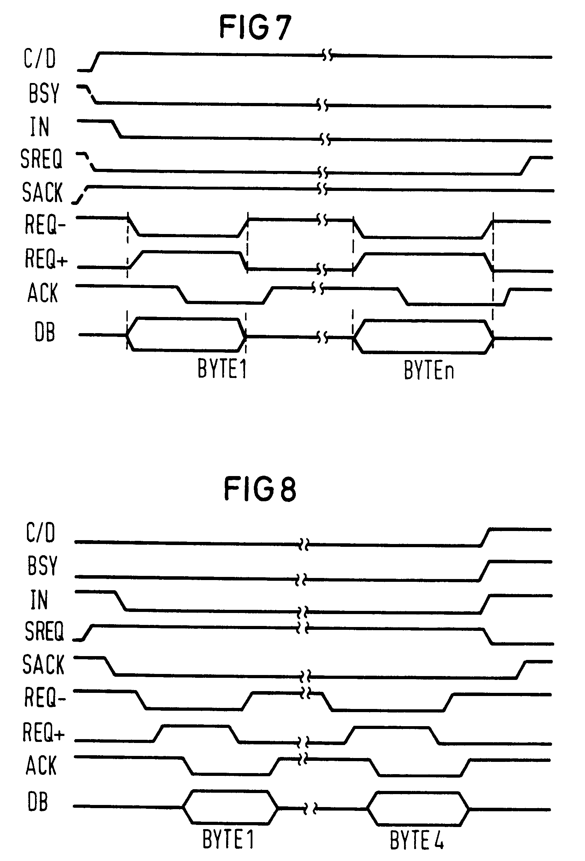

Anhand der Impulsformen von FIG 7 wird nunmehr der Ablauf im Dateneingabezustand erläutert. Wie in Zeile 1 von FIG 7 dargestellt, geht das Befehls/Datensignal C/D durch einen Zustandswechsel auf hohen Signalpegel, das Tätigsignal BSY ist während des gesamten Zustandes zurückgesetzt, siehe die zweite Zeile von FIG 7. Der Dateneingabezustand wird ausgelöst durch ein Zurücksetzen des Eingabesignales IN, wie in Zeile 3 von FIG 7 dargestellt ist. In diesen Zustand kann nur im Anschluß an den Befehlszustand eingetreten werden. Denn er dient dazu, Statusinformation der peripheren Speichergeräte 21 ... 2n bzw. in einem peripheren Speichergerät wieder ausgelesene Daten zum Host-Prozessor 1 zu übertragen. Der Dateneingabezustand ist zwar für alle angeschlossenen Speichergeräte 21 ... 2n gültig, es kann aber immer nur ein selektiertes Speichergerät Daten übertragen. Falls der Host-Prozessor 1 mehr als ein peripheres Speichergerät noch selektiert hat, dann müssen alle selektierten Speichergeräte ein Statusanforderungssignal SREQ absetzen, um den Übertritt in den Statuszustand herbeizuführen.

Aus diesem Grund ist der Dateneingabezustand definiert durch das Rücksetzen des Eingabesignales IN, entsprechend der dritten Zeile von FIG 7 und darüber hinaus durch das Rücksetzen der Statusanforderungssignale SREQ, wie in der vierten Zeile von FIG 7 angedeutet ist. Im übrigen verläuft nun der Datentransfer in umgekehrter Richtung zum Host-Prozessor 1 analog zu den bisher beschriebenen Datentransfers Byte für Byte, bis das letzte Datenbyte übertragen ist. Zu beachten ist lediglich eine Besonderheit, daß die verknüpften Datenanforderungssignale REQ+ bzw. REQ-genau gegenphasig sind, da ja nur ein einzelnes der peripheren Speichergeräte 21 ... 2n in diesem Zustand aktiv ist. Zum Abschluß des Dateneingabezustandes setzt das aktive Speichergerät schließlich ein individuelles Statusanforderungssignal, so daß das entsprechend verknüpfte Statusanforderungssignal SREQ, wie in Zeile 4 von FIG 7 dargestellt, im Host-Prozessor 1 wirksam wird.

In FIG 8 ist mit seinen verschiedenen Impulsformen der Ablauf im Statuszustand illustriert. Dieser Statuszustand dient zur Vervollständigung der Ausführung eines Befehles. In den Statuszustand wird entweder unmittelbar nach dem Befehlszustand, dem Datenausgabezustand oder dem Dateneingabezustand eingetreten. Während des Statuszustandes übermitteln alle selektierten Speichergeräte 21 ... 2n dem Host-Prozessor 1, ob der vorausgegangene Befehl korrekt ausgeführt wurde oder nicht. Alle selektierten Speichergeräte 21 ... 2n setzen individuelle Statusanforderungssignale, aus denen das UND-verknüpfte Statusanforderungssignal SREQ abgeleitet wird. Aufgrund dieser UND-Verknüpfung werden Statusanforderungen der einzelnen Speichergeräte 21 ... 2n im Host-Prozessor 1 erst dann wirksam, wenn alle Speichergeräte 21 ... 2n eine Statusanforderung abgesetzt haben.

In FIG 8 ist dies zunächst verdeutlicht durch die in den ersten beiden Zeilen dargestellten Impulsformen. Das Befehlsdatensignal C/D und das Tätigsignal BSY sind im rückgesetzten Zustand. Das in der vierten Zeile dargestellte verknüpfte Statusanforderungssignal SREQ ändert seinen Signalzustand, sobald durch die UND-Verknüpfung sichergestellt ist, daß alle selektierten Speichergeräte 21 ... 2n ihre individuelle Statusanforderung abgeben. Der Host-Prozessor 1 antwortet darauf mit dem Statusquittungssignal SACK, wie in der folgenden Zeile von FIG 8 dargestellt ist und tritt damit in den Statuszustand ein.

Die selektierten Speichergeräte 21 ... 2n generieren daraufhin das entsprechende Eingabesignal IN, das in seiner verknüpften Form in Zeile 3 von FIG 8 dargestellt ist und im Host-Prozessor 1 wirksam wird. Nach einer Stabilisierungszeit von mindestens 400 ns geben die selektierten Speichergeräte 21 ... 2n ein erstes Statusbyte aus und benutzen dabei die bereits mehrfach beschriebene Signalfolge bestehend aus den verknüpften Datenanforderungssignalen REQ+ und REQ- bzw. dem darauf folgenden Quittungssignal ACK. Diese Sequenz wird wiederholt, bis alle Statusbytes, im vorliegenden Beispiel mit maximal 32 angeschlossenen Speichergeräten handelt es sich um vier Bytes, übertragen sind. Danach wird das Eingabesignal IN, das Statusanforderungssignal SREQ von den peripheren Speichergeräten 21 ... 2n zurückgenommen und der Host-Prozessor 1 antwortet darauf mit der Rücknahme des Statusquittungssignales SACK.

In den Statusbytes setzt jedes Speichergerät 21 ...bzw. 2n individuell ein ihm zugeordnetes Statusbit, falls es bei seiner geräteindividuellen Überwachung feststellt, daß der vorausgegangene Befehl nicht ordnungsgemäß abgeschlossen wurde. Aus der empfangenen Statusinformation entnimmt der Host-Prozessor 1, ob in einem der Geräte ein Fehler aufgetreten ist. Die Art des Fehlers kann er allerdings so noch nicht ermitteln. Dazu muß er individuell jedes fehlerhaft arbeitende Speichergerät selektieren und weitere Informationen mit ihm austauschen.

## Patentansprüche

1. Verfahren zum Duplizieren des Inhaltes von optischen oder magnetischen Datenträgern mit Hilfe eines zentralen Host-Prozessors (1) als Datenquelle und einer Vielzahl (n) von mindestens einen Datenträger aufweisenden peripheren Speichergeräten (21 ... 2n), die über je einen Daten- und einen Steuerbus (3 bzw. 4) an den Host-Prozessor zum Austausch von Daten- bzw. Steuerinformationen angeschlossen sind, bei dem zum Synchronisieren der die zu duplizierende Dateninformation (DB7 ... DB0) parallel empfangenden Speichergeräte diese zunächst individuelle Anforderungssignale (z.B. dREQ) abgeben, wobei diese Signale codiert einen offenen Kollektor-Ausgang, der für jedes Speichergerät vorgesehen ist und der mit den entsprechenden offenen Kollektor-Ausgängen der anderen Speichergeräte durch eine Signalleitung sowie mit einem gemeinsamen Kollektorwiderstand verhinden ist, so schalten, daß die Anforderungssignale im Host-Prozessor erst dann wirksam werden, sobald alle Speichergeräte eine solche Anforderung abgegeben haben, bei dem daraufhin der Host-Prozessor parallel an alle Speichergeräte Dateninformationen über den Datenbus sowie ein Quittungssignal (ACK) über den Steuerbus überträgt, das die übertragene Dateninformation als gültig kennzeichnet, bei dem durch dieses Quittungssignal in den Speichergeräten außerdem ein Rücksetzen der individuellen Datenanforderungssignale ausgelöst wird und bei dem erst nach einem Rücksetzen aller individuellen Datenanforderungssignale diese Rücknahme im Host-Prozessor wirksam wird, der daraufhin seinerseits das Quittungssignal zurücksetzt.

2. Verfahren zum Duplizieren von Datenträgern nach Anspruch 1, **dadurch gekennzeichnet,** daß der Host-Prozessor (1) ständig ein Befehls/Datensignal (C/D) als Steuersignal generiert, das mit seinen beiden Signalzuständen über den Datenbus (3) übertragene Information als eine Steuerinformation vorzugsweise zum Einstellen bestimmter Funktionszustände der Speichergeräte (21 ... 2n) bzw. als abzuspeichernde Dateninformation kennzeichnet und daß mit dieser Steuerinformation unter anderem jede beliebige Unterkombination einer vorgegebenen Maximalzahl (n) von anschließbaren peripheren Speichergeräten für nachfolgende Verarbeitungsschritte solange aktiviert wird, bis der Host-Prozessor eine erneute Selektion tätiger Speichergeräte in anderer Kombination vornimmt, die gegebenenfalls nur ein einziges Speichergerät umfaßt.

3. Verfahren zum Duplizieren von Datenträgern nach Anspruch 2, **dadurch gekennzeichnet,** daß die Speichergeräte (21 ... 2n) nach dem Ausführen eines durch den Host-Prozessor (1) gesteuerten Funktionsablaufes über den Steuerbus (4) individuelle Statusanforderungssignale (SREQ) abgeben, die im Host-Prozessor wirksam werden, so bald alle angeschlossenen Speichergeräte diese individuellen Signale erzeugen, daß daraufhin der Host-Prozessor ein weiteres Quittungssignal (SACK) an die Speichergeräte überträgt und damit den Datenbus (3) zum Übertragen von Statusinformation von den peripheren Speichergeräten zum Host-Prozessor freigibt und daß die so freigegebene Übertragung der Statusinformation gegebenenfalls byteweise und dann jeweils synchronisiert durch eine Abfolge von Datenanforderungssignalen (dREQ) der Speichergeräte und Quittungssignalen (ACK) des Host-Prozessors erfolgt.

4. Verfahren zum Duplizieren von Datenträgern nach Anspruch 3, **dadurch gekennzeichnet,** daß in jedem tätigen Speichergerät (21 ... bzw. 2n) nach dem Ausführen eines durch den Host-Prozessor (1) vorgegebenen Funktionsablaufes eine Überwachung auf den ordnungsgemäßen Ablauf dieser Funktion vorgenommen wird, daß als Ergebnis dieser Überwachung vom Speichergerät ein einzelnes Bitsignal ausgegeben wird, dessen Signalzustand die fehlerfreie Ausführung bzw. einen fehlerhaften Gerätezustand kennzeichnet und das innerhalb der Statusinformation an einer bestimmten, für das jeweilige Speichergerät festgelegten Position steht und daß im Host-Prozessor die übermittelte Statusinformation überprüft und anschließend gegebenenfalls ein fehlerhaft arbeitendes Speichergerät individuell selektiert wird, um mit ihm weitere Kontrollinformation auszutauschen, dadurch die Art des Fehlers zu ermitteln und das fehlerhaft arbeitende Speichergerät schließlich zu deaktivieren, falls der festgestellte Fehler nicht behebbar ist.

5. Einrichtung zum Durchführen eines Verfahrens nach Anspruch 1, bei der zum Übermitteln von Steuersignalen (z.B. REQ+) von den Speichergeräten (21 ... 2n) an den Host-Prozessor (1) für jedes Speichergerät und für jedes Steuersignal Codierstufen (z.B. 204) vorgesehen sind, denen eingangsseitig ein entsprechendes, geräteintern erzeugtes, individuelles Steuersignal (z.B. dREQ) zugeführt ist und die ausgangsseitig mindestens einen offen Kollektorausgang aufweisen, der parallel mit den Ausgängen entsprechender Codierstufen der anderen Speichergeräte und einem gemeinsamen Kollektorwiderstand mit einer der Steuerleitungen des Steuerbusses nach Art einer festverdrahteten logischen Verknüpfung verbunden ist und bei der der Host-Prozessor eine entsprechende Anpassungsschaltung (z.B. 103) aufweist, die eingangsseitig an die entsprechende Steuerleitung angeschlossen ist und die in Abhängigkeit von dem Signalzustand auf der Steuerleitung jeweils den Funktionszustand annimmt, der der logischen Verknüpfung aller geräteindividuellen Signalzustände für das jeweilige Steuersignal entspricht, so daß am Ausgang dieser Anpassungsschaltung prozessorintern erst dann ein verknüpftes Steuersignal vorliegt, sobald alle Speichergeräte ein Anforderungssignal abgegeben haben.

6. Einrichtung nach Anspruch 5, **dadurch gekennzeichnet,** daß zum Generieren eines Paares von positiven bzw. negativen Datenanforderungssignalen (REQ+, REQ-) jedem der Speichergeräte (21 ... 2n) eine Codierstufe (204) zugeordnet ist, die ein Paar von NAND-Gliedern (205, 206) mit offenem Kollektorausgang aufweist, daß ein erster Eingang der NAND-Glieder fest auf hohem Signalpegel liegt und einem zweiten Eingang der NAND-Glieder ein geräteintern erzeugtes, individuelles Datenanforderungssiganl (dREQ) direkt bzw. invertiert zugeführt ist und daß in der entsprechenden Anpassungsschaltung (103) des Host-Prozessors (1) jede der beiden die Datenanforderungssignale übertragenden Steuerleitungen an einen Empfangsverstärker (105, 106) angeschlossen ist und weiterhin ein RS-Flipflop (107) vorgesehen ist, dessen Setzeingang (S) bzw. Rücksetzeingang (R) jeweils mit einem Ausgang eines der Empfangsverstärker verbunden ist und das ein prozessorinternes Anforderungssignal (hREQ) abgibt.

7. Einrichtung nach Anspruch 6, **dadurch gekennzeichnet,** daß in den Codierstufen zum Abgeben der Datenanforderungssignale (REQ+, REQ-) ein NOR-Glied (207) vorgesehen ist, dessen einem Eingang das geräteintern erzeugte Anforderungssignal (dREQ) zugeführt ist und an dessen zweitem Eingang ein ebenfalls geräteintern erzeugtes simuliertes Anforderungssignal (FREQ) zuführbar ist, das von dem jeweiligen Speichergerät im Fehlerfall bzw. im deaktivierten Zustand zwangsweise abgegeben wird, um eine Datenanforderung zu simulieren.

## Claims

1. A method of copying the contents of optical or magnetic data media by means of a central host processor (1) as data source and a plurality (n) of peripheral memory devices (21... 2n) which comprise at least one data medium and which are connected in each case via a data bus and a control bus (3 and 4 respectively) to the host processor for the exchange of data and control information, wherein, for the purpose of synchronising the memory devices receiving in parallel the data information (DB7 ... DB0) for copying, said memory devices initially deliver individual request signals (e.g. dREQ), said signals in encoded form so switching an open collector output, which is provided for each memory device and which is connected to the corresponding open collector outputs of the other memory devices by a signal line and to a common collector resistor, that the request signals become operative in the host processor only when all the memory devices have delivered such a request, whereupon the host processor transmits parallel to all the memory devices data information via the data bus and an acknowledgement signal (ACK) via the control bus to identify the transmitted data information as valid, wherein resetting of the individual data request signals is also triggered by this acknowledgement signal in the memory devices and wherein it is only after all the individual data request signals have been reset that this cancellation becomes operative in the host processor, the latter then in turn resetting the acknowledgement signal.

2. A method of copying data media according to claim 1, characterised in that the host processor (1) permanently generates a command/data signal (C/D) as a control signal which, by its two signal states, identifies information transmitted via the data bus (3) as a control information preferably for adjusting certain functional states of the memory devices (21 ... 2n) or as data information for storage, and in that with this control information, inter alia, any desired sub-combination of a predetermined maximum number (n) of connectable peripheral memory devices for subsequent processing steps are activated until the host processor effects a new selection of active memory devices in a different combination, which may possibly comprise just a single memory device.

3. A method of copying data media according to claim 2, characterised in that after performing a function cycle controlled by the host processor (1), the memory devices (21 ... 2n) deliver via the control bus (4) individual status request signals (SREQ) which become operative in the host processor as soon as all the connected memory devices generate these individual signals, whereupon the host processor transmits another acknowledgement signal (SACK) to the memory devices and thus frees the data bus (3) for the transmission of status information from the peripheral memory devices to the host processor and in that the transmission of status information thus freed takes place, if required, byte-wise and then in each case in synchronism by a sequence of data request signals (dREQ) of the memory devices and acknowledgement signals (ACK) of the host processor.

4. A method of copying data media according to claim 3, characterised in that after performance of a function cycle predetermined by the host processor (1), the proper progress of this function is monitored in each active memory device (21 ... 2n), in that the result of this monitoring of the memory device is the delivery of an individual bit signal, the state of which identifies the fault-free performance or a faulty equipment condition, said signal being at a specific position within the status information, such position being established for each memory device, and in that the transmitted status information is tested in the host processor and then where applicable a faulty memory device is selected individually in order to exchange further check information therewith, in order thus to determine the type of fault and finally deactivate the faulty memory device if the detected fault cannot be cleared.

5. A device for performing a method according to claim 1, wherein encoding stages (e.g. 204) are provided for each memory device and for each control signal for the purpose of transmitting control signals (e.g. REQ+) from the memory devices (21 ... 2n) to the host processor (1), the input side of said encoding stages being fed with a corresponding internally generated individual control signal (e.g. dREQ) and having on the output side at least one open collector output which is connected in parallel with the outputs of corresponding encoding stages of the other memory devices and a common collector resistor to one of the control lines of the control bus after the style of a permanently wired logic combination, and wherein the host processor has a corresponding matching circuit (e.g. 103), the input side of which is connected to the corresponding control line and which, in dependence on the signal state on the control line, assumes in each case that functional state which corresponds to the logic combination of all the equipment-individual signal states for the associated control signal, so that at the output of this matching circuit there is present internally of the processor a combined control signal only when all the memory devices have delivered a request signal.

6. A device according to claim 5, characterised in that an encoding stage (204) comprising a pair of NAND gates (205, 206) with an open collector output is associated with each of the memory devices (21 ... 2n) for generating a pair of positive and negative data request signals (REQ+, REQ-), in that a first input of the NAND gates is permanently at a high signal level and there is fed directly or in inverted form to a second input of the NAND gates an individual data request signal (dREQ) generated internally of the equipment, and in that in the corresponding matching circuit (103) of the host processor (1) each of the two control lines transmitting the data request signals is connected to a reception amplifier (105, 106) and also an RS flip-flop (107) is provided, the setting input (S) and resetting input (R) of which are respectively connected to an output of one of the reception amplifiers and which delivers a processor-internal request signal (hREQ).

7. A device according to claim 6, characterised in that there is provided in the encoding stages for delivery of the data request signals (REQ+, REQ-) a NOR gate (207), to one input of which is fed the request signal (dREQ) generated internally of the equipment and to the second input of which there can be fed a simulated request signal (FREQ) which is likewise generated internally of the equipment and which is automatically delivered by the associated memory device in the event of a fault or in the deactivated state, in order to simulate a data request.

## Revendications

1. Procédé de reproduction du contenu de supports optiques ou magnétiques de données à l'aide d'un processeur central (1) comme source de données et d'un grand nombre (n) d'appareils enregistreurs périphériques (21, 2n) présentant au moins un support de données qui sont reliés par un bus de données (3) et un bus de commande (4) au processeur central pour l'échange d'informations de données et de commandes, dans lequel, pour la synchronisation des appareils enregistreurs recevant en parallèle l'information de données à reproduire (DB7 à DBO), ceux-ci, d'abord, émettent des signaux individuels de demande (par exemple dREQ), ces signaux actionnant de manière codée une sortie "collecteur ouvert", qui est prévue pour chaque appareil enregistreur et est reliée aux sorties "collecteur ouvert" correspondantes des autres appareils enregistreurs par une ligne de signaux et à une résistance commune de collecteur, de façon qu'ils n'agissent dans le processeur central que dès que tous les appareils enregistreurs ont émis une telle demande, dans lequel, après cela, le processeur central transmet en parallèle à tous les appareils enregistreurs des informations de données par le bus de données et un signal d'accusé de réception (ACK) par le bus de commande, signal qui indique que l'information de données transmise est valide, dans lequel ce signal d'accusé de réception déclenche en outre dans les appareils enregistreurs une remise à zéro des signaux individuels de demande de données, et dans lequel c'est seulement après une remise à zéro de tous les signaux individuels de demande de données que ce retrait agit dans le processeur central qui, après cela, retire pour sa part le signal d'accusé de réception.

2. Procédé de reproduction de supports de données selon la revendication 1, caractérisé par le fait que le processeur central (1) produit en permanence, comme signal de commande, un signal d'instruction/données (C/D) qui indique par ses deux états que l'information transmise par le bus de données (3) est une information de commande de préférence pour le réglage de certains états de fonctionnement des appareils enregistreurs (21 à 2n) ou est une information de données à lire et que, avec cette information de commande, entre autres, n'importe quelle sous-combinaison d'un nombre maximal fixé (n) d'appareils enregistreurs périphériques raccordables pour des phases de traitement suivantes est activée jusqu'à ce que le processeur central fasse une nouvelle sélection d'appareils enregistreurs actifs en une autre combinaison, qui comprend éventuellement un seul appareil enregistreur.

3. Procédé de reproduction de supports de données selon la revendication 2, caractérisé par le fait que les appareils enregistreurs (21 à 2n), après l'exécution d'un cycle de fonctionnement commandé par le processeur central (1), envoient par le bus de commande (4) des signaux individuels de demande d'état (SREQ) qui agissent dans le processeur central dès que tous les appareils enregistreurs connectés les produisent, qu'après cela, le processeur central transmet un autre signal d'accusé de réception (SACK) aux appareils enregistreurs et ainsi libère le bus de données (3) pour la transmission d'information d'état des appareils enregistreurs périphériques au processeur central, et que la transmission ainsi libérée de l'information d'état se fait éventuellement par octets et ensuite, dans chaque cas de manière synchronisée, par une suite de signaux de demande de données (dREQ) des appareils enregistreurs et de signaux d'accusé de réception (ACK) du processeur central.

4. Procédé de reproduction de supports de données selon la revendication 3, caractérisé par le fait que, après l'exécution d'un cycle de fonctionnement fixé par le processeur central (1), dans chaque appareil enregistreur actif (21 ... 2n) est fait un contrôle du bon déroulement de ce fonctionnement, que l'appareil enregistreur émet comme résultat de ce contrôle un signal binaire distinct dont l'état indique l'exécution sans erreurs ou un état défectueux de l'appareil et qui se trouve dans l'information d'état à un endroit déterminé fixé pour l'appareil enregistreur et que, dans le processeur central, l'information d'état transmise est contrôlée et ensuite, le cas échéant, un appareil enregistreur fonctionnant de manière défectueuse est choisi individuellement pour qu'avec lui soit échangée une information supplémentaire de contrôle, que la nature du défaut soit ainsi déterminée et qu'enfin l'appareil enregistreur fonctionnant de manière défectueuse soit mis hors service si le défaut trouvé ne peut pas être réparé.

5. Dispositif pour la mise en oeuvre d'un procédé selon la revendication 1, dans lequel, pour la transmission de signaux de commande (par exemple REQ+) des appareils enregistreurs (21 à 2n) au processeur central (1), pour chaque appareil enregistreur et pour chaque signal de commande sont prévus des étages de codage (par exemple 204), à l'entrée desquels est envoyé un signal de commande individuel correspondant produit dans l'appareil (par exemple dREQ), qui présente du côté sortie au moins une sortie "collecteur ouvert" qui est relié, en parallèle avec les sorties d'étages de codage correspondants des autres appareils enregistreurs et avec une résistance commune de collecteur, à une des lignes de commande du bus de commande à la manière d'une combinaison logique câblée de manière fixe, et dans lequel le processeur central présente un circuit d'adaptation correspondant (par exemple 103) qui est connecté, du côté entrée, à la ligne de commande correspondante et qui prend, en fonction de l'état du signal sur la ligne de commande, l'état de fonctionnement qui correspond à la combinaison logique de tous les états propres aux appareils du signal de commande, de sorte qu'à la sortie de ce circuit d'adaptation, à l'intérieur du processeur, n'existe un signal de commande combiné que dès que tous les appareils enregistreurs ont émis un signal de demande.

6. Dispositif selon la revendication 5, caractérisé par le fait que, pour la production d'une paire de signaux respectivement positif et négatif de demande de données (REQ+, REQ-), est adjoint à chacun des appareils enregistreurs (21 à 2n) un étage de codage (204) qui présente une paire de portes NON-ET (205, 206) à sortie "collecteur ouvert", qu'une première entrée de ces portes NON-ET est en permanence à un niveau de signal haut et à une deuxième entrée de ces portes NON-ET est envoyé, direct ou inversé, un signal individuel de demande de données (dREQ) produit dans l'appareil et que, dans le circuit d'adaptation correspondant (103) du processeur central (1), chacune des deux lignes de commande transmettant les signaux de demande de données est connectée à un amplificateur de réception (105, 106) et il est en outre prévu une bascule RS (107) dont l'entrée de mise à 1 (S) et l'entrée de mise à zéro (R) sont reliées chacune à une sortie d'un des amplificateurs de réception et qui émet un signal de demande (hREQ) intérieur au processeur.

7. Dispositif selon la revendication 6, caractérisé par le fait que, dans les étages de codage, est prévue, pour l'émission des signaux de demande de données (REQ+, REQ-), une porte Nl (207) à une entrée de laquelle est envoyé le signal de demande (dREQ) produit dans l'appareil et à la seconde entrée de laquelle peut être envoyé un signal de demande simulé (FREQ) également produit dans l'appareil qui est émis de manière forcée par l'appareil enregistreur en cas de défaut ou à l'état hors service pour simuler une demande de données.
